Europäisches Patentamt

European Patent Office

Office européen des brevets

(11) Veröffentlichungsnummer: **0 351 452**
**A1**

## EUROPÄISCHE PATENTANMELDUNG

(21) Anmeldenummer: 88119110.0

(22) Anmeldetag: 17.11.88

(51) Int. Cl.⁴: **B01D 53/26 , B01D 53/04**

(30) Priorität: 22.07.88 DE 8809377 U

(43) Veröffentlichungstag der Anmeldung:
24.01.90 Patentblatt 90/04

(84) Benannte Vertragsstaaten:
AT BE CH DE ES FR GB GR IT LI LU NL SE

(71) Anmelder: WENKO-WENSELAAR GMBH & CO.
KG
Im Hülsenfeld 10
D-4010 Hilden(DE)

(72) Erfinder: Glienke, Peter O.
Luisenstrasse 20
D-7570 Baden-Baden(DE)

(74) Vertreter: von Rohr, Hans Wilhelm, Dipl.-Phys.
et al
Patentanwälte Gesthuysen & von Rohr
Huyssenallee 15 Postfach 10 13 33
D-4300 Essen 1(DE)

(54) **Raumentfeuchter.**

(57) Dargestellt und beschrieben ist ein völlig autonomer, herstellungstechnisch und handhabungstechnisch besonders einfacher Raumentfeuchter mit einem nach oben offenen Wasserauffangbehälter (1), einem an der offenen Seite in den Wasserauffangbehälter (1) eingehängten Tragrahmen (2) und einer auf dem Tragrahmen (2) liegenden Wasseraufnahmefüllung (3) aus hygroskopischem Material, insbesondere aus Calciumchloridgranulat, wobei der Tragrahmen (2) Wasserablauföffnungen (4) aufweist, so daß von der Wasseraufnahmefüllung (3) aus der Umgebungsatmosphäre aufgenommenes Wasser bei Übersättigung in den Wasserauffangbehälter (1) abtropft, der dadurch gekennzeichnet ist, daß der Tragrahmen (2) als nach oben offener Aufnahmebehälter (5) mit im Boden (6) angeordneten Wasserablauföffnungen (4) ausgeführt ist und der Wasserauffangbehälter (1) und der Aufnahmebehälter (5) als ineinander stapelbare Standardbehälter mit angepaßten Breiten und Längen bzw. Durchmessern, aber, vorzugsweise, unterschiedlichen Höhen ausgeführt sind.

Fig.1

## Raumentfeuchter

Die Erfindung betrifft einen Raumentfeuchter nach dem Oberbegriff von Anspruch 1.

Raumentfeuchter der in Rede stehenden Art dienen dazu, die Feuchtigkeit in der Luft aufzunehmen und in Form von Wasser im Wasserauffangbehälter zu sammeln. Die Wasseraufnahmefüllung besteht dabei zumeist aus preisgünstigem Calciumchlorid, das nicht nur sehr gute hygroskopische Eigenschaften - Wasseradsorptionsfähigkeit - aufweist, sondern auch in Granulatform bereitgestellt werden kann, so daß es leicht handhabbar ist. Andere verbreitete hygroskopische Materialien sind beispielsweise Silicagel, Aluminiumoxidgel usw.. Für die normalen Standardanwendungen ist aus Kosten- und Handhabungsgründen aber nach wie vor Calciumchlorid erste Wahl. Calciumchlorid verliert allerdings nach längerer Zeit seine hygroskopischen Eigenschaften allmählich und beginnt zu verklumpen. Ähnliches gilt auch für die anderen hygroskopischen Materialien. Die Wasseraufnahmefüllung muß also bei einem Raumentfeuchter der in Rede stehenden Art von Zeit zu Zeit ausgetauscht werden.

Der bekannte Raumentfeuchter, von dem die Erfindung ausgeht, hat als Wasserauffangbehälter einen einfachen Wassereimer, beispielsweise einen Haushaltseimer. An der offenen Oberseite wird in den Wasserauffangbehälter ein Tragrahmen eingehängt, der seitlich verstellbare Aufhängehaken trägt. Der Tragrahmen weist mindestens eine Wasserablauföffnung, vorzugsweise mehrere Wasserablauföffnungen auf. Häufig ist der Tragrahmen auch als Gitterwerk ausgebildet, so daß die Gitteröffnungen als Wasserablauföffnungen dienen. Die Wasseraufnahmefüllung befindet sich in einem engmaschigen Netz, das als auswechselbares Teil lose auf den Tragrahmen aufgelegt wird. Mitunter ist in den Tragrahmen noch eine Matte aus Filz od. dgl. eingelegt, durch die das in der Wasseraufnahmefüllung gesammelte und nach unten ablaufende Wasser gesammelt wird und in den Wasseraufnahmebehälter abtropft.

Der zuvor erläuterte, bekannte Raumentfeuchter ist zweckmäßig, da das im Wasserauffangbehälter gesammelte Wasser nach Abnehmen des Tragrahmens mit der Wasseraufnahmefüllung einfach weggegossen werden kann und da das Austauschen der Wasseraufnahmefüllung außerordentlich einfach ist. Allerdings ist die Herstellung und der Einsatz des bekannten Raumentfeuchters in der Praxis noch nicht optimal. In der Herstellung ist der bekannte Raumentfeuchter noch nicht optimal, da der Tragrahmen mit seinen verstellbaren Aufhängehaken ein relativ aufwendiges Teil ist. Handhabungstechnisch ist der bekannte Raumentfeuchter noch nicht optimal, da die Trennung der Wasseraufnahmefüllung vom Tragrahmen häufig handhabungstechnische Probleme aufwirft und da von der den Raumentfeuchter erwerbenden Hausfrau zunächst zur Komplettierung als Wasserauffangbehälter ein eigener Haushaltseimer herausgesucht werden muß, der dann häufig an anderer Stelle fehlt.

Der Erfindung liegt die Aufgabe zugrunde, einen völlig autonomen, herstellungstechnisch und handhabungstechnisch besonders einfachen Raumentfeuchter anzugeben.

Die zuvor aufgezeigte Aufgabe ist bei einem Raumentfeuchter mit den Merkmalen des Oberbegriffs von Anspruch 1 durch die Merkmale des kennzeichnenden Teils von Anspruch 1 gelöst.

Erfindungsgemäß wird statt des Tragrahmens mit verstellbaren Aufhängehaken ein kompletter Aufnahmebehälter verwirklicht, der wie der Wasserauffangbehälter nur an einer Seite, nämlich nach oben offen ist. Im Aufnahmebehälter findet die Wasseraufnahmefüllung unproblematisch Platz. Dabei werden der Wasserauffangbehälter einerseits und der Aufnahmebehälter andererseits aneinander angepaßt, wird also davon abgegangen, einen beliebigen Haushaltseimer als Wasserauffangbehälter zu verwenden. Um den mit dieser Maßnahme grundsätzlich verbundenen größeren Aufwand wiederum so zu verringern, daß im Ergebnis ein herstellungstechnisch geringerer Aufwand gegeben ist, ist erfindungsgemäß vorgesehen, den Wasserauffangbehälter ebenso wie den Aufnahmebehälter als ineinander stapelbare Standardbehälter auszuführen. Ineinander stapelbare Standardbehälter werden in großen Mengen sehr wirtschaftlich hergestellt, und zwar in den verschiedensten Breiten und Längen bzw. Durchmessern und in den unterschiedlichsten Höhen. Je nach den individuellen Anforderungen können unterschiedliche, natürlich aneinander angepaßte Standardbehälter als Wasserauffangbehälter und Aufnahmebehälter verwendet werden. Breiten und Längen bzw. Durchmesser der verwendeten Standardbehälter müssen aneinander angepaßt sein, die Höhen sind hingegen vorzugsweise unterschiedlich. Ein und derselbe Aufnahmebehälter kann dann je nach Bedarf auf Wasserauffangbehälter mit unterschiedlichem Wasserauffangvolumen aufgesetzt werden.

Handhabungstechnisch ist der erfindungsgemäße Raumentfeuchter insbesondere deshalb für den Haushalt einfach zu verwenden, da nicht nach einem Haushaltseimer gesucht werden muß, sondern stets der Wasserauffangbehälter Teil des gelieferten Raumentfeuchters ist.

Es gibt nun eine Vielzahl von Möglichkeiten,

2

die Lehre der Erfindung auszugestalten und weiterzubilden. Dazu wird zunächst auf die dem Anspruch 1 nachgeordneten Ansprüche verwiesen. Diese Ansprüche werden allgemein auch noch nachfolgend in Verbindung mit der Erläuterung eines bevorzugten Ausführungsbeispiels der Erfindung anhand der Zeichnung erläutert. In der Zeichnung zeigt

Fig. 1 in einer Seitenansicht, als Sprengdarstellung, ein bevorzugtes Ausführungsbeispiel des erfindungsgemäßen Raumentfeuchters,

Fig. 2 den Aufnahmebehälter des Raumentfeuchters aus Fig. 1 im Schnitt,

Fig. 3 in einer Draufsicht den Deckel für einen Aufnahmebehälter in einem ersten Ausführungsbeispiel,

Fig. 4 in Fig. 3 entsprechender Darstellung ein weiteres Ausführungsbeispiel eines Deckels und

Fig. 5 in einer Untersicht einen Aufnahmebehälter für einen Raumentfeuchter gemäß Fig. 1.

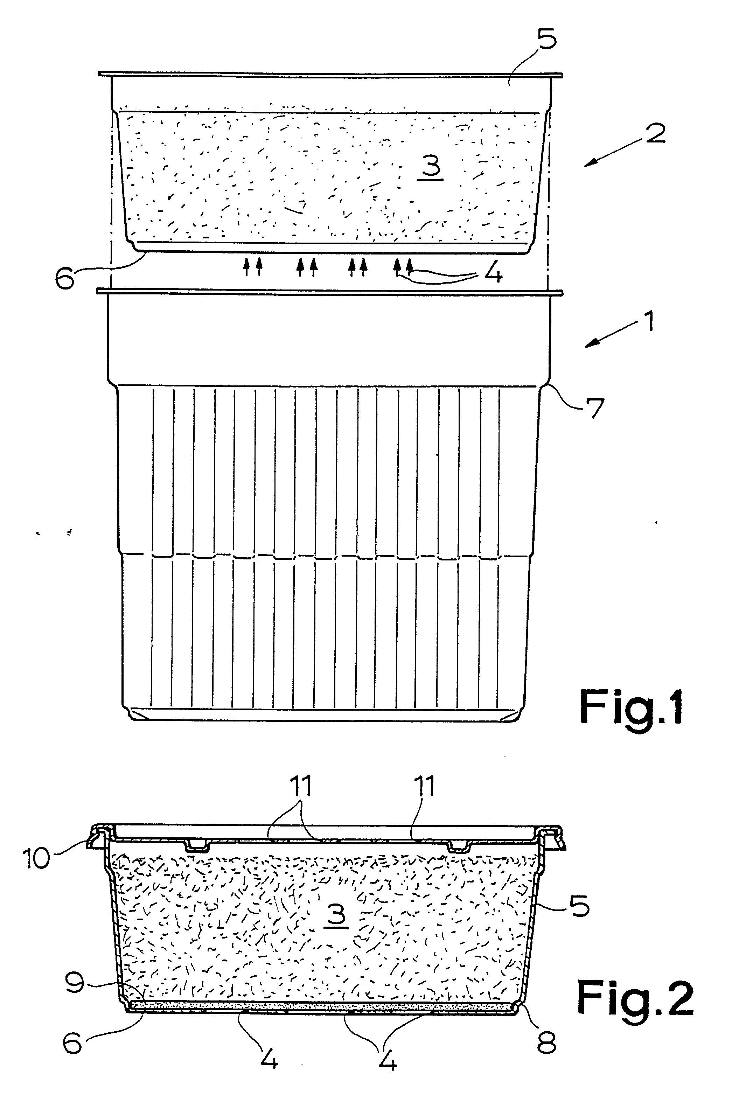

Die in Fig. 1 gewählte Sprengdarstellung zeigt den erfindungsgemäßen Raumentfeuchter besonders deutlich. Der Raumentfeuchter weist zunächst einen nach oben offenen Wasserauffangbehälter 1 auf. An der offenen Seite ist in den Wasserauffangbehälter 1 ein Tragrahmen 2 eingehängt, in dem eine Wasseraufnahmefüllung 3 aus hygroskopischem Material, insbesondere aus Calciumchloridgranulat, liegt. Letzteres ist durch Punktierung angedeutet. Der Tragrahmen 2 weist lediglich durch Pfeile angedeutete Wasserablauföffnungen 4 auf, so daß von der Wasseraufnahmefüllung 3 aus der Umgebungsatmosphäre aufgenommenes Wasser bei Übersättigung in den Wasserauffangbehälter 1 durch diese Wasserablauföffnungen 4 abtropfen kann.

Fig. 1 macht nun besonders deutlich, daß der Tragrahmen 2 als nach oben offener Aufnahmebehälter 5 mit im Boden 6 angeordneten Wasserablauföffnungen 4 ausgeführt ist und der Wasserauffangbehälter 1 und der Aufnahmebehälter 5 als ineinander stapelbare Standardbehälter mit angepaßten Breiten und Längen bzw. Durchmessern, aber, vorzugsweise, unterschiedlichen Höhen ausgeführt ist. Im dargestellten Ausführungsbeispiel und nach bevorzugter Lehre der Erfindung bestehen dabei der Wasserauffangbehälter 1 und der Aufnahmebehälter 5 aus Kunststoff. Beide können in üblicher Weise als Tiefziehteile hergestellt werden, wie das für derartige stapelbare Standardbehälter im Grundsatz seit langem bekannt ist. Dieses Herstellungsverfahren ist außerordentlich preisgünstig, so daß solche stapelbaren Standardbehälter mit äußerst geringen Kosten herstellbar sind. Der Wasserauffangbehälter 1 kann dabei mit Versteifungssicken ausgeführt sein, um bei größerer Höhe auch größeren Gewichten standzuhalten. Die Höhe des Aufnahmebehälters 5 ist allein durch das Volumen der Wasseraufnahmefüllung 3 bestimmt. Wegen der erheblich größeren Höhe des Wasserauffangbehälters 1 läßt sich ein ganz erhebliches Wasservolumen im Wasserauffangbehälter 1 sammeln, bevor dieser ausgeleert werden muß.

Grundsätzlich gilt zunächst, daß anstelle der mehreren Wasserablauföffnungen 4 im Boden 6 des Aufnahmebehälters 5 auch eine einzige Wasserablauföffnung vorgesehen sein könnte. Eine gleichmäßigere Entwässerung der Wasseraufnahmefüllung 3 ist aber durch eine Mehrzahl von verteilt angeordneten Wasserablauföffnungen 4 gewährleistet.

Das Einhängen des Aufnahmebehälters 5 in den Wasserauffangbehälter 1 könnte einfach so erfolgen, daß der Wasserauffangbehälter 1 an der offenen Seite einen außen umlaufenden Auflageflansch und der Aufnahmebehälter 5 einen auf dem Auflageflansch aufliegenden Tragflansch aufweist. Das wäre eine statisch ohne weiteres zweckmäßige Lösung. Allerdings könnte man den Aufnahmebehälter wegen der unmittelbar aufeinanderliegenden Flansche nur mit besonderen Griffen oder mit großer Mühe vom Wasserauffangbehälter abnehmen. Das ist aber eine von Zeit zu Zeit erforderliche Handhabung, um das im Wasserauffangbehälter 1 gesammelte Wasser auszugießen. Einen nach oben überragenden Rand, an den der Aufnahmebehälter 5 ohne weiteres angehoben werden kann, gewinnt man dadurch, daß der Wasseraufnahmebehälter 1 gegenüber der offenen Seite nach innen versetzt einen umlaufenden Auflageflansch 7 und der Aufnahmebehälter 5 am unteren Rand einen auf dem Auflageflansch 7 aufliegenden Tragflansch 8 aufweist. Die Abstützung im Wasserauffangbehälter 1 erfolgt dadurch also in erster Linie am unteren Rand des Aufnahmebehälters 5, so daß der obere Rand nicht auf einem umlaufenden Auflageflansch des Wasserauffangbehälters 1 aufliegen muß.

Hinsichtlich der Stapelbarkeit, insbesondere im Zusammenhang mit der zuvor erläuterten, bevorzugten Ausführungsform eines Raumentfeuchters, empfiehlt es sich, daß der Wasserauffangbehälter 1 zumindest am oberen Rand sich leicht konisch öffnend ausgeführt ist und/oder der Aufnahmebehälter 5 leicht konisch verlaufende Seitenwände aufweist. Mit dieser Ausgestaltung kann der Aufnahmebehälter 5 unter seinem Eigengewicht satt in die vom oberen Rand des Wasserauffangbehälters 1 gebildete Tragfassung hineingleiten.

Die Tatsache, daß der Tragrahmen 2 im erfindungsgemäßen Raumentfeuchter als wannenartiger Aufnahmebehälter 5 ausgeführt ist, führt nun zu einem weiteren herstellungstechnischen und handhabungstechnischen Vorteil. Die Wasseraufnahmefüllung 3 muß nämlich nun nicht mehr in einem engmaschigen Netz geliefert werden, sie kann sich vielmehr als Schüttung lose im Aufnahmebehälter 5 befinden. Der Boden 6 des Aufnahmebehälters 5 sollte dann zweckmäßigerweise von einer wasserdurchlässigen Matte 9 aus Schaumstoff, Filz, Cellulosevlies bedeckt sein. Wie eingangs erläutert, sind solche Matten an sich bekannt. Die hier im Aufnahmebehälter 5 liegende Matte 9 verhindert, daß das hygroskopische Material der Wasseraufnahmefüllung 3 durch die Wasserablauföffnungen 4 in den Wasserauffangbehälter 1 gelangt. Gleichzeitig dient eine solche Matte 9 zum Sammeln des Wassers, so daß dieses nach unten ablaufen kann.

Zuvor sind verschiedene Materialien für die Matte 9 angesprochen worden. Jedenfalls gilt dabei, daß die Matte 9 aus einem saugfähigen Material bestehen sollte. Nicht dargestellt ist in der Zeichnung, daß die Matte 9 auf der Oberseite und ggf. auch auf der Unterseite zackenartig abstehende Ausformungen aufweisen kann. Die Ausformungen an der Oberseite ragen in das hygroskopische Material hinein und nehmen Wasser aus dem hygroskopischen Material auf, um es nach unten abzuführen. Das wirkt der Verklumpneigung des hygroskopischen Materials entgegen und erhöht die Standzeit. Nach unten abstehende Ausformungen fördern das gezielte Abtropfen von Wasser in den Wasserauffangbehälter.

Die erfindungsgemäß zu verwendenden ineinander stapelbaren Standardbehälter haben den großen Vorteil, daß sie standardmäßig mit aufrastbaren Deckeln, die diesem standardisierten System entsprechen, angeboten werden. Erfindungsgemäß empfiehlt es sich nun insoweit, daß der Aufnahmebehälter 5 durch einen dem standardisierten System entsprechenden Deckel 10 geschlossen ist, daß, vorzugsweise, der Deckel 10 mit Lufteintrittsöffnungen 11 versehen ist und daß, vorzugsweise, die Lufteintrittsöffnungen 11 im Mittelbereich des Deckels 10 konzentriert sind. Ist der Aufnahmebehälter 5 durch einen standardisierten Deckel 10 geschlossen, so ist der Aufnahmebehälter 5 zunächst einmal luftdicht abgeschlossen. Das bedeutet auch einen luftdichten Abschluß der Wasseraufnahmefüllung 3, so daß diese im Prinzip sehr lange gelagert werden kann. Zum "Aktivieren" des erfindungsgemäßen Raumentfeuchters könnte man nun zunächst den Deckel 10 einfach vom Aufnahmebehälter 5 abnehmen. Das wäre aber insoweit unpraktisch, als, jedenfalls dann, wenn die Wasseraufnahme füllung 3 als loses Schüttgut eingebracht ist, die Wasseraufnahmefüllung 3 verschmutzt oder auch verstreut wird. Folglich empfiehlt es sich, den Deckel 10 nach der Füllung des Aufnahmebehälters 5 auf diesen aufzurasten und danach nicht mehr vom Aufnahmebehälter 5 zu trennen. Den Lufteintritt in die Wasseraufnahmefüllung 3 ermöglichen dann die Lufteintrittsöffnungen 11. Diese sind aus technischen und designerischen Gründen besonders zweckmäßig im Mittelbereich des Deckels 10 zu konzentrieren.

Transporttechnisch und lagerungstechnisch von besonderem Vorteil ist es, wenn die Wasserablauföffnungen 4, die Lufteintrittsöffnungen 11 bzw., insbesondere, sowohl die Wasserablauföffnungen 4 als auch die Lufteintrittsöffnungen 11, mit einer abziehbaren Klebefolie 12 verschlossen sind. Mit dieser Maßnahme wird erreicht, daß die Wasseraufnahmefüllung 3 im Aufnahmebehälter 5 bei befestigten Klebefolien 12 praktisch unbegrenzt haltbar ist und erst durch Abziehen der Klebefolien 12 am Einsatzort und zur gewünschten Einsatzzeit "aktiviert" werden kann. Dann, wenn man die Klebefolie flächenmäßig teilbar macht, läßt sich auch ein unterschiedlich großer Lufteintrittsquerschnitt realisieren, so daß die hygroskopische Wirkung der Wasseraufnahmefüllung "gesteuert" werden kann.

Die zuletzt erläuterte Gestaltung des Aufnahmebehälters 5 bedeutet, daß dieser als Verpackungs- und Transporteinheit für die Wasseraufnahmefüllung 3 dient. Der Aufnahmebehälter 5 samt darin enthaltener Wasseraufnahmefüllung 3 kann also auch separat gewissermaßen als "Nachfüllpackung" für den erfindungsgemäßen Raumentfeuchter geliefert werden.

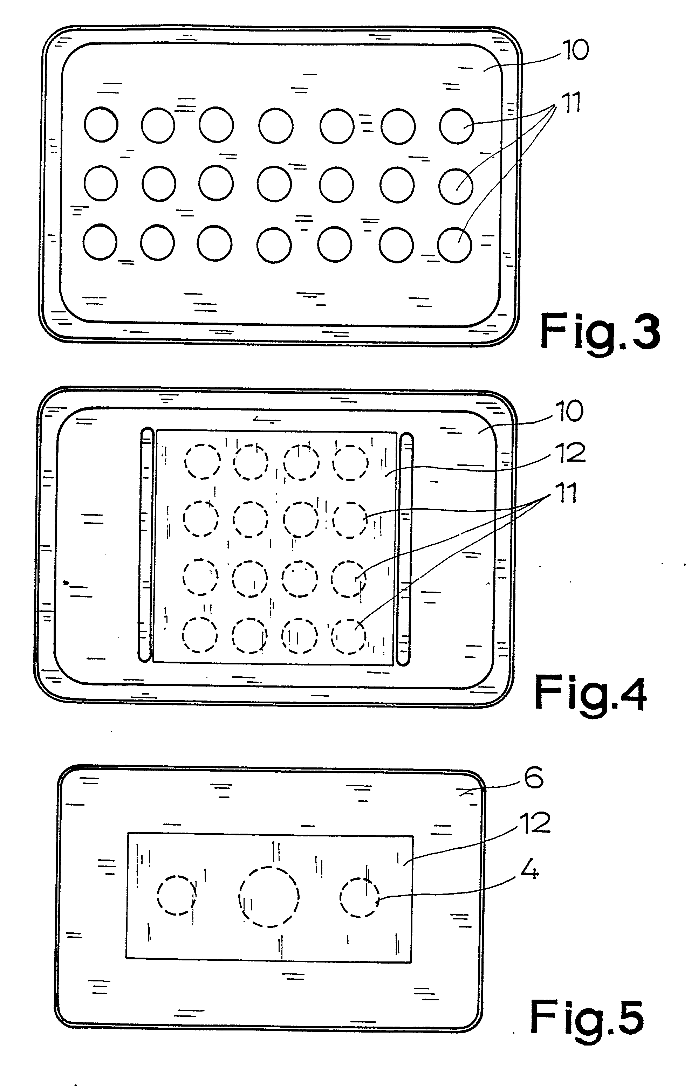

Fig. 3 zeigt in Draufsicht einen Deckel 10 mit gleichmäßig über die Fläche verteilt angeordneten Lufteintrittsöffnungen 11 bei abgezogener Klebefolie 12. Demgegenüber zeigt Fig. 4 einen Deckel 10 mit im Mittelbereich konzentrierten Lufteintrittsöffnungen 11, die hier nur gestrichelt dargestellt sind, da sie von einer Klebefolie 12 noch verschlossen sind. Fig. 5 macht deutlich, wie die Wasserablauföffnungen 4 im Boden 6 des Aufnahmebehälters 5 ebenfalls durch eine Klebefolie 12 verschlossen sein können.

**Ansprüche**

1. Raumentfeuchter mit einem nach oben offenen Wasserauffangbehälter (1), einem an der offenen Seite in den Wasserauffangbehälter (1) eingehängten Tragrahmen (2) und einer auf dem Tragrahmen (2) liegenden Wasseraufnahmefüllung (3) aus hygroskopischem Material, insbesondere aus Calciumchloridgranulat, wobei der Tragrahmen (2) Wasserablauföffnungen (4) aufweist, so daß von der Wasseraufnahmefüllung (3) aus der Umgebungsatmosphäre aufgenommenes Wasser bei Übersättigung in den Wasserauffangbehälter (1) abtropft, **dadurch gekennzeichnet**, daß der Tragrahmen (2) als nach oben offener Aufnahmebehälter (5) mit im Boden (6) angeordneten Wasserablauföffnungen (4) ausgeführt ist und der Wasserauffangbehälter (1) und der Aufnahmebehälter (5) als ineinander stapelbare Standardbehälter mit angepaßten Breiten und Längen bzw. Durchmessern, aber, vorzugsweise, unterschiedlichen Höhen ausgeführt sind.

2. Raumentfeuchter nach Anspruch 1, dadurch gekennzeichnet, daß der Wasserauffangbehälter (1) und der Aufnahmebehälter (5) aus Kunststoff, insbesondere aus durchscheinendem, den Wasserstand im Wasserauffangbehälter (1) erkennbar lassenden Kunststoff bestehen.

3. Raumentfeuchter nach Anspruch 1 oder 2, dadurch gekennzeichnet, daß der Wasseraufnahmebehälter (1) gegenüber der offenen Seite nach innen versetzt einen umlaufenden Auflageflansch (7) und der Aufnahmebehälter (5) am unteren Rand einen auf dem Auflageflansch (7) aufliegenden Tragflansch (8) aufweist.

4. Raumentfeuchter nach einem der Ansprüche 1 bis 3, dadurch gekennzeichnet, daß der Wasserauffangbehälter (1) zumindest am oberen Rand sich leicht konisch öffnend ausgeführt ist und/oder der Aufnahmebehälter (5) leicht konisch verlaufende Seitenwände aufweist.

5. Raumentfeuchter nach einem der Ansprüche 1 bis 4, dadurch gekennzeichnet, daß die Wasseraufnahmefüllung (3) sich als Schüttung lose im Aufnahmebehälter (5) befindet und, vorzugsweise, der Boden (6) des Aufnahmebehälters (5) von einer wasserdurchlässigen Matte (9) bedeckt ist.

6. Raumentfeuchter nach Anspruch 5, dadurch gekennzeichnet, daß die Matte (9) aus einem saugfähigen Material besteht.

7. Raumentfeuchter nach Anspruch 5 oder 6, dadurch gekennzeichnet, daß die Matte (9) auf der Oberseite und ggf. auch auf der Unterseite zackenartig abstehende Ausformungen aufweist.

8. Raumentfeuchter nach einem der Ansprüche 1 bis 7, dadurch gekennzeichnet, daß der Aufnahmebehälter (5) durch einen dem standardisierten System entsprechenden Deckel (10) geschlossen ist, daß, vorzugsweise, der Deckel (10) mit Lufteintrittsöffnungen (11) versehen ist und daß, vorzugsweise, die Lufteintrittsöffnungen (11) im Mittelbereich des Deckels (10) konzentriert sind.

9. Raumentfeuchter nach Anspruch 8, dadurch gekennzeichnet, daß die Wasserablauföffnungen (4), die Lufteintrittsöffnungen (11) bzw., insbesondere, sowohl die Wasserablauföffnungen (4) als auch die Lufteintrittsöffnungen (11), mit einer abziehbaren Klebefolie (12) verschlossen sind.

10. Raumentfeuchter nach einem der Ansprüche 1 bis 9, dadurch gekennzeichnet, daß der mit einem Deckel (10) verschlossene, die Wasseraufnahmefüllung (3) als Schüttung lose enthaltende, durch Klebefolien (12) verschlossene Wasserablauföffnungen (4) und Lufteintrittsöffnungen (11) aufweisende Aufnahmebehälter (5) eine Verpackungs- und Transporteinheit für die Wasseraufnahmefüllung (3) bildet.

**Fig.1**

**Fig.2**

Fig.3

Fig.4

Fig.5

Europäisches Patentamt

# EUROPÄISCHER RECHERCHENBERICHT

Nummer der Anmeldung

EP 88 11 9110

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 116 239 (MUTANDIS) <br> * Figuren 1,2 * | 1-4,8 | B 01 D 53/26 <br> B 01 D 53/04 |
| A | | 5-7 | |
| | --- | | |
| X | WO-A-8 101 995 (ZEIDLER HOLMGREN) <br> * Figuren 1-3 * | 1 | |
| A | | 2-8 | |
| | --- | | |
| X | FR-A-2 578 444 (J. VASSEUR) <br> * Figur * | 1,4,8 | |
| A | | 2,3,5-7 | |
| | --- | | |
| A | US-A-3 277 636 (C. HEMMERLEIN) | | |
| | --- | | |
| A | GB-A-2 098 501 (KAKEN CHEMICAL) | | |
| | ----- | | |

### RECHERCHIERTE SACHGEBIETE (Int. Cl.4)

B 01 D

Der vorliegende Recherchenbericht wurde für alle Patentansprüche erstellt

| Recherchenort | Abschlußdatum der Recherche | Prüfer |
|---|---|---|
| DEN HAAG | 13-10-1989 | KANOLDT W.W. |